# EUROPEAN PATENT SPECIFICATION

(11) **EP 4 460 070 B1**
(45) Date of publication and mention of the grant of the patent: **28.10.2026**
(21) Application number: 22913608.0
(22) Date of filing: 30.09.2022
(51) Int. Cl.: H04W 24/02, H04L 1/00

(54) **CHANNEL ADAPTIVE PROCESSING METHOD, BASE STATION AND READABLE STORAGE MEDIUM**
KANALADAPTIVES VERARBEITUNGSVERFAHREN, BASISSTATION UND LESBARES SPEICHERMEDIUM
PROCÉDÉ DE TRAITEMENT ADAPTATIF DE CANAL, STATION DE BASE ET SUPPORT DE STOCKAGE LISIBLE

(30) Priority: 30.12.2021 CN 202111658647
(43) Date of publication of application: 06.11.2024
(73) Proprietor: ZTE Corporation, Shenzhen, Guangdong 518057 (CN)
(72) Inventor: LIU, Xuebin, Shenzhen, Guangdong 518057 (CN)
(74) Representative: Boult Wade Tennant LLP
(86) International application number: PCT/CN2022/123533
(87) International publication number: WO 2023/124343

(56) References cited:
- CN-A- 101 227 251
- CN-A- 103 181 207
- CN-A- 110 351 865
- CN-A- 113 207 165
- CN-A- 113 225 829
- US-B2- 8 457 002

## Description

### CROSS-REFERENCE TO RELATED APPLICATIONS

### TECHNICAL FIELD

Embodiments of the present application relate to the technical field of mobile communications, and in particular to a channel adaptative processing method, a base station, and a readable storage medium.

### BACKGROUND

In the 4th and 5th generation mobile communication systems (4G and 5G for short), the basic service flow between the Base Station (BS) and the User Equipment (UE) is as follows: the base station schedules a service channel by sending DCI (Downlink Control Information) to the user equipment through a PDCCH (Physical Downlink Control Channel), DCI including DCIO scheduling a PUSCH (Physical Uplink Shared Channel) and DCI1 scheduling a PDSCH (Physical Downlink Shared Channel). The UE receives the DCIO and then sends the PUSCH to the BS. The BS receives and demodulates the PUSCH. CRC (Cyclic redundancy check) is firstly performed in demodulation. If the CRC passes, it is ACK (Acknowledgement), i.e., correct reception of the PUSCH is confirmed, and if it does not pass, it is NACK (Negative Acknowledgement).

In the related art, for the case where the CRC does not pass, the BS decides whether it is DCIO Lost based on comparison between some measurements of the PUSCH with preset thresholds, and adjusts the corresponding physical downlink control channel and physical uplink shared channel corresponding to the UE according to the judgment result.

In some cases, there is at least the following problem: when the judgment result of the BS is wrong, there is a further problem that the service of the UE is continuously deteriorated and interrupted due to successive misjudgments.

The patent document CN103181207A discloses a method for determining whether a CRC PUSCH error is due to PDCCH lost or to an uplink error, based on measured uplink SINR and RSRP, which are compared to respective threshold ranges.

The patent document US2012026985A1 discloses corrective measures if PDCCH losses are detected, e.g. increasing power or coding rate.

### SUMMARY

An object of embodiments of the present application is to provide a channel adaptative processing method, a base station, and a readable storage medium, which can avoid the problem that the service of the UE is continuously deteriorated due to successive misjudgments, thereby causing service interruption of the UE.

To solve the above technical problem, the embodiments of the present application provide a channel adaptative processing method, including: sending downlink control information to a user equipment by means of a physical downlink control channel; receiving and demodulating a physical uplink shared channel of the user equipment, and performing cyclic redundancy check on the physical uplink shared channel; when a check result of cyclic redundancy check is negative acknowledgement, judging whether a first measurement value of the physical uplink shared channel is within a preset range, wherein the preset range is greater than or equal to a first threshold and smaller than or equal to a second threshold; if the first measurement value is within the preset range, and a current judgment result is executed for a preset duration or a counting number reaches a preset number of times, switching the judgment result, wherein the counting number is a number of times the current judgment result is executed or a number of times an adjustment result corresponding to the current judgment result occurs, switching the judgment result is switching output between a first judgment result and a second judgment result, the first judgment result indicating that the downlink control information is lost, and the second judgment result indicating that the downlink control information is not lost; and adjusting the physical downlink control channel corresponding to the user equipment and the physical uplink shared channel corresponding to the user equipment according to the judgment result.

Embodiments of the present application further provide a base station including: at least one processor; and, a memory communicatively connected with the at least one processor; wherein, the memory stores instructions executable by the at least one processor, the instructions being executed by the at least one processor to enable the at least one processor to perform the channel adaptive processing method as described above.

Embodiments of the present application also provide a computer-readable storage medium storing a computer program, which, when executed by a processor, implements the channel adaptative processing method described above.

### BRIEF DESCRIPTION OF FIGURES

One or more embodiments are illustrated by the pictures in the corresponding drawings, which do not constitute a limitation on the embodiments, and elements having the same reference numerals in the drawings are represented as similar elements, and unless otherwise stated, the figures in the drawings do not constitute a scale limitation.
FIG. 1 is a schematic diagram of a channel adaptative processing module related to uplink service scheduling in the related art;
FIG. 2 is a flowchart of a channel adaptative processing method provided by a first embodiment of the present application;
FIG. 3 is a flowchart of another channel adaptative processing method provided by the first embodiment of the present application;
FIG. 4 is a schematic diagram of a channel adaptative processing method provided by the first embodiment of the present application;
FIG. 5 is a process flowchart of an intelligent judgement module for performing alternative judgment strategy switching based on judgment result counting in the first embodiment of the present application;
FIG. 6 is a process flowchart of an intelligent judgment module for performing alternative judgment strategy switching based on adjustment result counting in the first embodiment of the present application;
FIG. 7 is a flowchart of high and low threshold adaptive optimization based on counting of judgment results of intelligent judgment and UE state in the first embodiment of the present application; and
FIG. 8 is a schematic diagram of a base station provided by a second embodiment of the present application.

### DETAILED DESCRIPTION

In order to make the objects, technical solutions and advantages of the embodiments of the present application more clear, the embodiments of the present application will be described in detail below with reference to the accompanying drawings. However, those of ordinary skill in the art can appreciate that in the various embodiments of the present application, numerous technical details are set forth in order to provide the reader with a better understanding of the present application. However, the claimed technical solution can be implemented without these technical details and various variations and modifications based on the following embodiments.

For CRC, if the check passes, it is ACK, i.e., correct reception of the PUSCH is confirmed, and if not, it is NACK. NACK may be caused by a high MCS (Modulation and coding scheme) of the PUSCH or low power of the PUSCH, but the NACK may also be caused by that the UE did not receive DCIO, here defined as DCIO Lost. When the UE does not receive DCIO, the PUSCH will not be sent, the signal received by the BS is actually only noise and interference, so the CRC fails.

For the above case, a BS judges whether it is DCIO Lost based on comparison between some measurements of the PUSCH, such as the PSD (Power Spectrum Density) or SINR (Signal to Interference plus Noise Ratio) of the PUSCH, with preset thresholds. If the threshold is exceeded, the BS considers that the UE receives DCIO and sends the PUSCH, and if the threshold is not exceeded, the BS considers that the UE does not receive DCIO, i.e., DCIO Lost. However, since there is no absolutely inevitable linear relationship between the magnitude of the PUSCH-related measurement value and whether the CRC of the PUSCH passes or not, in order to avoid a misjudgment of DCIO Lost, the BS typically makes the judgment of DCIO Lost after the PUSCH CRC is NACK. If the PUSCH CRC is ACK, even if the PUSCH-related measurement value does not exceed the threshold, it is judged that the UE receives DCIO rather than DCIO Lost. The concrete implementation of the industry may also combine MCS, RI, RB and so on of the PUSCH.

If the judgment of the BS is DCIO Lost, the BS considers that the PDCCH sent to the UE is not strong enough, which leads to failure of reception and demodulation of the UE. In this case, the BS needs to enhance the PDCCH performance by increasing the Aggregation Level or power of a CCE (Control channel element) of the PDCCH. For the 4th generation mobile communication 4G, there are a total of four CCE aggregation levels, i.e., 1/2/4/8, and for the 5th generation mobile communication 5G, there are five CCE aggregation levels, i.e., 1/2/4/8/16. The higher the aggregation level of the CCE, the greater the resource overhead of the PDCCH and the stronger the performance of the PDCCH. The power of CCE can usually be adjusted within the range of [-6, 6] dB of the reference power. The BS can preset a target value of DCIO Lost for the UE, such as 1%. The judgment and counting of DCIO Lost are carried out for each UE each time when the BS schedules DCIO. If the DCIO Lost ratio of certain UE is higher than the target rate, the aggregation level or power of the CCE of the PDCCH for scheduling the UE is increased; otherwise, if the DCIO Lost ratio is lower than the target rate, the aggregation level or power of the CCE is reduced, the relevant adjustment being limited to the upper and lower limits of the aggregation level or power of the CCE. Here, for convenience of description, the adaptive processing of such channel is referred to as ACAL (Adaptive CCE Aggregation Level).

If the judgment of the BS is not DCIO lost of the PDCCH, i.e., the judgment is ACK or NACK of the PUSCH, the BS performs AMC (Adaptive Modulation and Coding) or PC (Power Control) of the PUSCH by calculating a Block Error Ratio (BLER) of the PUSCH using the judged ACK or NACK and comparing the BLER with a target BLER (Target-BLER) of the PUSCH preset by the BS. If the BLER is higher than the Target-BLER, the AMC decreases the MCS (Modulation and coding scheme) of the PUSCH, or the PC increases the TX-Power of the PUSCH, whereas if the BLER is lower than the Target-BLER, the AMC increases the MCS of the PUSCH, or the PC decreases the TX-Power of the PUSCH, the relevant adjustment being limited to the upper and lower limits of the MCS or TX-Power.

For the PUSCH NACK or DCIO Lost, the BS also performs adaptive retransmission of the PUSCH of the UE by means of a HARQ (Hybrid Automatic repeat Request) module of the PUSCH. In case of DCIO Lost, the RV (Redundancy Version) of the HARQ takes 0; and in case of PUSCH NACK, different values are taken depending on the number of retransmissions, typically RV = 2/3/1/0 for 1/2/3/4 retransmissions.

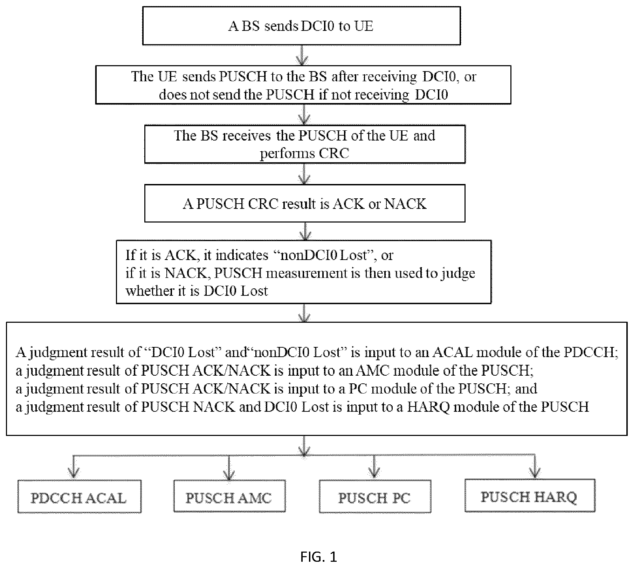

FIG. 1 is a flowchart of channel adaptation processing related to uplink service scheduling, wherein an ACAL (Adaptive CCE Aggregation Level) module for the PDCCH, an AMC (Adaptive Modulation and Coding) module for the PUSCH, a PC (Power Control) module for the PUSCH, and a HARQ (Hybrid Automatic Request Request) module for the PUSCH are all channel adaptive processing modules.

In the above procedure for judging whether DCIO Lost exists or not based on related measurements after CRC failure, generally a single threshold is used for judgement in the industry, the judgment is PUSCH NACK if a measurement value is higher than the threshold, and the judgment is DCIO Lost if the measurement value is lower than the threshold, but the optimal thresholds for different scenarios are not fixed and unique, resulting in a certain probability of misjudgments. For a certain UE under a certain BS, scenarios tend to be relatively stable within second-level short time, once a misjudgment occurs, a misjudgment lasting for sec-level time length is likely to occur. for 4G and 5G with the scheduling unit duration in the millisecond level, the UE may be scheduled up to tens or even hundreds of times by the BS in 1 second, and a large number of successive misjudgments may result in a large amount of consecutive erroneous channel adaptative processing, as a result, the service is not guaranteed or improved, but is worsened and can not be handled in time, thereby causing dropping and interruption. For example, when PUSCH NACK occurs, the BS determines DCIO Lost via the related measurement of the PUSCH based on a single threshold, and the BS will implement PDCCH ACAL to enhance the performance of the PDCCH so as to reduce DCIO Lost. If the real situation is not DCIO Lost but PUSCH NACK, then PUSCH AMC is not implemented to reduce MCS due to the judgment error, which may lead to continuous error resolution of the PUSCH. Or when PUSCH NACK occurs, the BS determines PUSCH NACK via the related measurement of the PUSCH based on a single threshold, the BS will implement PUSCH AMC or PC to enhance the performance of the PUSCH so as to reduce the PUSCH BLER. If the real situation is not PUSCH NACK but DCIO Lost, then the PDCCH ACAL is not implemented to enhance the performance of the PDCCH due to the judgment error, which may cause that the UE continues to fail in receiving and demodulating DCIO. These successive misjudgments and misoperations will eventually lead to HARQ Fail, Radio-Link Failure (RLF) and abnormal disconnection of the UE services.

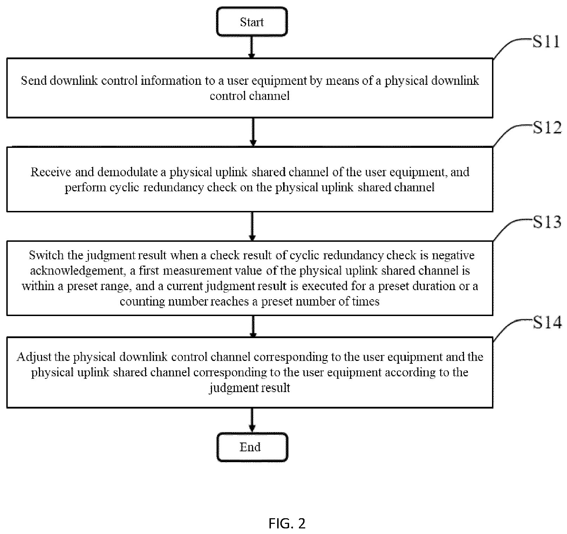

A first embodiment of the present application relates to a channel adaptative processing method, as shown in FIG. 2, including the following steps.

At S11: downlink control information is sent to a user equipment by means of a physical downlink control channel.

In some examples, the base station schedules a service channel by sending downlink control information to the user equipment by means of a physical downlink control channel, the downlink control information may include DCIO scheduling a physical uplink shared channel and DCI1 scheduling a physical downlink shared channel.

At S12: a physical uplink shared channel of the user equipment is received and demodulated, and cyclic redundancy check is performed on the physical uplink shared channel.

In some examples, the UE sends the physical uplink shared channel to the base station after receiving the DCIO, the base station receives and demodulates the physical uplink shared channel, and performs CRC (Cyclic redundancy check) on the physical uplink shared channel. If the CRC passes, it is ACK (Acknowledgement), i.e., it is confirmed that the physical uplink shared channel is correctly received; and if the CRC does not pass, it is NACK (Negative Acknowledgement), i.e., the physical uplink shared channel is not correctly received.

At S13: a judgment result is switched when a check result of cyclic redundancy check is negative acknowledgement, a first measurement value of the physical uplink shared channel is within a preset range, and a current judgment result is executed for a preset duration or a counting number reaches a preset number of times.

Wherein, the first measurement value may include a power spectral density or a signal to interference plus noise ratio, i.e., the first measurement value is the PSD (Power Spectrum Density) or the SINR (Signal to Interference plus Noise Ratio) of the PUSCH. The preset range may be greater than or equal to a first threshold and smaller than or equal to a second threshold, the preset range indicates an ambiguous region in which the judgment result is probabilistically erroneous, and the first threshold and the second threshold may be set based on historical adjustment results, and may be dynamically adjusted subsequently.

The judgment result is switched is that output is switched between a first judgment result and a second judgment result, the first judgment result indicating that the downlink control information is lost, and the second judgment result indicating that the downlink control information is not lost. That is, the term "The judgment result is switched" means that if the first judgment result is output first, later the second judgment result is switched to, or if the second judgment result is output first, later the first judgment result is switched to.

The preset duration can be regarded as the validity period of the current judgment result, and the preset number of times can be regarded as the trustworthy upper limit of the current judgment result, or the upper limit of the adjustable amount of the adjustment result corresponding to the current judgment result. In some examples, the preset duration can be set based on consumed time for radio link recovery of the user equipment in the historical adjustment process.

The counting number is the number of times for which the current judgment result has been executed or the number of times for which an adjustment result corresponding to the current judgment result has occurred. The preset number of times can be set according to the number of times of adjustment that the radio link of the user equipment is restored to normal in the historical adjustment process, for example, the preset number of times can be a positive integer greater than or equal to 1.

At S14: the physical downlink control channel corresponding to the user equipment and the physical uplink shared channel corresponding to the user equipment are adjusted according to the judgment result.

In some examples, the base station adjusts the physical downlink control channel corresponding to the user equipment and the physical uplink shared channel corresponding to the user equipment according to the judgment result. For example, the base station may adjust the ACAL module of the PDCCH, the AMC module of the PUSCH, the PC module of the PUSCH, and the HARQ module of the PUSCH corresponding to the user equipment according to the judgment result.

After the first measurement value is judged to be within the preset range, whether at least one of the two conditions of "the current judgment result is executed for the preset duration" and "the counting number reaches the preset number of times" is satisfied is judged. If YES, the judgment result is switched, wherein the preset range is greater than or equal to the first threshold and smaller than or equal to the second threshold. The ambiguous region in which the judgment result is probabilistically erroneous is dealt with by a more flexible way of alternately outputting the judgment result, so that the judgment result and the corresponding channel adaptive processing are more reasonable and reliable, and the situation that the channel adaptive processing mode corresponding to the misjudged judgment result will further lead to the deterioration of the UE service when the judgment result is wrong due to the single threshold judgment is prevented, thus avoiding the problem that the successive misjudgments make the UE service continuously deteriorate and further leads to the interruption of the UE service.

In practice, after whether the first measurement value of the physical uplink shared channel is within the preset range is judged, the method further includes: the second judgment result is output if the first measurement value is greater than the second threshold; and the first judgment result is output if the first measurement value is smaller than the first threshold.

In the embodiments of the present application, when the check result of cyclic redundancy check is negative acknowledgement, whether the first measurement value of the physical uplink shared channel is within the preset range is judged, wherein the preset range is greater than or equal to the first threshold and smaller than or equal to the second threshold; if the first measurement value is within the preset range, and the current judgment result is executed for the preset duration or the counting number reaches the preset number of times, the judgment result is switched, wherein the counting number is the number of times the current judgment result is executed or the number of times the adjustment result corresponding to the current judgment result occurs, switching of the judgment result is switching output between a first judgment result and a second judgment result, the first judgment result indicating that the downlink control information is lost, and the second judgment result indicating that the downlink control information is not lost, that is to say, after the first measurement value is judged to be within the preset range, whether at least one of the two conditions of "the current judgment result is executed for the preset duration" and "the counting number reaches the preset number of times" is satisfied is judged, if YES, the judgment result is switched, wherein the preset range is greater than or equal to the first threshold and smaller than or equal to the second threshold, and the preset range indicates the ambiguous region in which the judgment result is probabilistically erroneous, the preset duration can be regarded as the validity period of the current judgment result, and the preset number of times can be regarded as the trustworthy upper limit of the current judgment result, or the upper limit of the adjustable amount of the adjustment result corresponding to the current judgment result. The ambiguous region in which the judgment result is probabilistically erroneous is dealt with by a more flexible way of alternately outputting the judgment result, so that the judgment result and the corresponding channel adaptive processing are more reasonable and reliable, and the situation that the channel adaptive processing mode corresponding to the misjudged judgment result will further lead to the deterioration of the UE service when the judgment result is wrong due to the single threshold judgment is prevented, thus avoiding the problem that the successive misjudgments make the UE service continuously deteriorate and further leads to the interruption of the UE service.

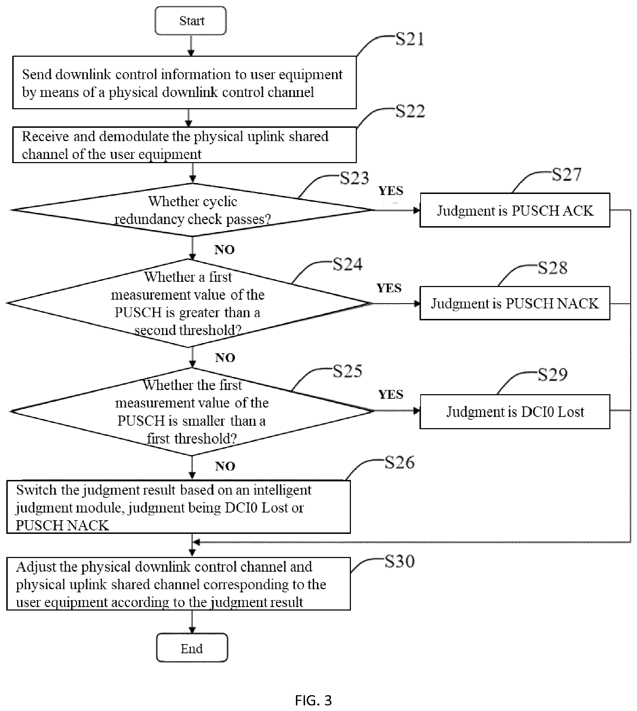

As illustrated in FIG. 3, the channel adaptative processing method includes the following steps.

At S21: downlink control information is sent to user equipment by means of a physical downlink control channel.

At S22: a physical uplink shared channel of the user equipment is received and demodulated.

At S23: whether cyclic redundancy check passes is judged, if not, step S24 is executed, and if yes, step S27 is executed.

At S24: whether a first measurement value of the physical uplink shared channel is greater than the second threshold is judged, if not, step S25 is executed, and if yes, step S28 is executed.

At S25: whether the first measurement value of the physical uplink shared channel is smaller than the first threshold is judged, if not, step S15 is executed, and if yes, step S29 is executed.

Wherein, the first threshold (low threshold) is smaller than the second threshold (high threshold).

At S26:a judgment result is switched based on an intelligent judgment module, and the judgment is DCIO Lost or PUSCH NACK.

Wherein, DCIO Lost (a first judgment result) indicates that the downlink control information is lost and PUSCH NACK (a second judgment result) is "non DCIO Lost", and indicates that the downlink control information is not lost.

At S27: the judgment is PUSCH ACK.

At S28: the judgment is PUSCH NACK.

At S29: the judgment is DCIO Lost.

Specifically, under both high and low thresholds, when the first measurement value is greater than the high threshold, the judgment is PUSCH NACK; when the first measurement value is smaller than the low threshold, the judgment is DCIO Lost; and when the first measurement value is between the high and low thresholds, an intelligent judging manner of alternatively switching the judgment strategy is adopted, i.e., the judgment is PUSCH NACK or the judgment is DCIO Lost.

At S30: the physical downlink control channel and physical uplink shared channel corresponding to the user equipment are adjusted according to the judgment result.

Of course, it is also possible to judge whether the first measurement value is smaller than the first threshold first, and if not, whether the first measurement value is greater than the second threshold is then judged, and the similar technical effects also can be realized, which is not limited here.

In an embodiment, in the step of switching the judgment result based on the intelligent judgment module, in an initial default state, the first judgment result (i.e., DCIO Lost) may be output first.

That is, the judgment strategy configured initially as default is DCIO Lost, i.e., the priority judgment is DCIO Lost. If DCIO Lost is misjudged as PUSCH NACK, then the following operations of decreasing the PUSCH MCS or increasing the PUSCH Tx-Power tend not to succeed because that these adjustment commands need to be sent to the UE through PDCCH DCIO. On the contrary, if the PUSCH NACK is misjudged as DCIO Lost, only the retransmission combining gain is lost, resulting in less loss.

In particular, the intelligent judgment module may take various schemes to make the judgment. In one example, the step that the physical uplink shared channel of the user equipment is received and demodulated includes: the physical uplink shared channel of the user equipment is continuously received and demodulated. The step that if the first measurement value is within the preset range, and the current judgment result is executed for the preset duration or the counting number reaches the preset number of times, the judgment result is switched, includes: each time after the first measurement value is judged to be within the preset range, whether a timer is started is judged, if the timer is started, the current judgment result is output and a counting number of the current judgment result is counted; if the timer is not started, the timer is started, the current judgment result is output and the counting number of the current judgment result is counted; and after a timing duration of the timer reaches the preset duration, or the counting number reaches the preset number of times, the judgment result is switched, and the counting number and the timing duration are cleared to zero. Wherein, the counting number of the current judgment result can be counted by a counter. The alternative switching judgment strategy based on judgment result counting has the advantages of less complexity and less overhead.

In another example, the step that the physical uplink shared channel of the user equipment is received and demodulated includes: the physical uplink shared channel of the user equipment is continuously received and demodulated. The step that if the first measurement value is within the preset range, and the current judgment result is executed for the preset duration or the counting number reaches the preset number of times, the judgment result is switched, includes: each time after the first measurement value is judged within the preset range, whether a timer is started is judged; if the timer is started, the current judgment result is output and the counting number of an adjustment result corresponding to the current judgment result is counted; if the timer is not started, the timer is started, the current judgment result is output and the counting number of the adjustment result corresponding to the current judgment result is counted; and after a timing duration of the timer reaches the preset duration, or the counting number reaches the preset number of times, the judgment result is switched, and the counting number and the timing duration are cleared to zero. Wherein, the counting number of the adjustment result corresponding to the current judgment result can be counted by a counter. The alternative switching judgment strategy based on adjustment result counting is more accurate.

In some embodiments, it is also possible to set only the timer, the step "if the first measurement value is within the preset range, and the current judgment result is executed for the preset duration or the counting number reaches the preset number of times, the judgment result is switched" may include: after the first measurement value is judged within the preset range each time, whether a timer is started is judged; if the timer is started, the current judgment result is output; if the timer is not started, the timer is started, the current judgment result is output; and after a timing duration of the timer reaches the preset duration, the judgment result is switched, and the timing duration is cleared to zero.

In some embodiments, it is also possible to set only the counter, the step "if the first measurement value is within the preset range, and the current judgment result is executed for the preset duration or the counting number reaches the preset number of times, the judgment result is switched" may include: after the first measurement value is judged within the preset range each time, the current judgment result is output and a counting number of the current judgment result (or the adjustment result corresponding to the current judgment result) is counted; after the counting number reaches the preset number of times, the judgment result is switched, and the counting number is cleared to zero.

In some embodiments, the preset number of times may be set to 1, that is, every time after it is determined that the first measurement value is within the preset range, the judgment result is switched. Of course, the preset number of times may also be any positive integer greater than 1, and will not be repeated here.

Wherein, triggering of the step that "the BS receives and demodulates the physical uplink shared channel of the user equipment" is determined jointly by the service requirements of the user equipment and the scheduling of the user equipment by the base station, that is, in the step that "the BS continuously receives and demodulates the physical uplink shared channel of the user equipment", receiving and demodulating of the physical uplink shared channel of the user equipment is not executed periodically in general.

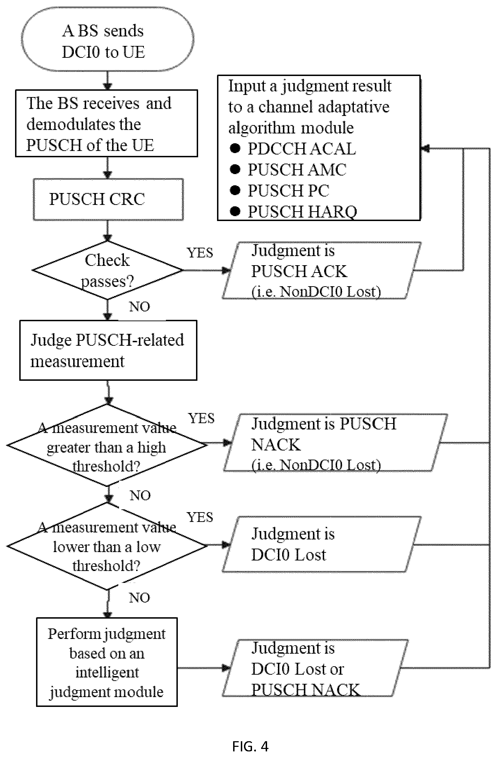

In practical application, the specific flow of the above channel adaptive processing method can be referred to FIG. 4. Specifically, when the BS sends PDCCH DCIO to a certain UE to schedule the PUSCH, the BS will receive and demodulates the PUSCH of the UE, firstly, CRC of the PUSCH is performed, when the CRC result of the PUSCH is NACK, then the relevant measurement value of the PUSCH (such as PSD or SINR) is judged based on the double thresholds: the high and low double thresholds of the relevant measurement value of the PUSCH are set, when the measurement value is greater than the high threshold, the judgment is "non-DCIO Lost", that is, PUSCH NACK, and the judgment result is input into each channel adaptive processing module; when the measurement value is smaller than the low threshold, the judgment is DCIO Lost, and the judgment result is input into each channel adaptive processing module; when the measurement value is between the high threshold and the low threshold, it may be DCIO Lost or PUSCH NACK. In this case, the intelligent judgment module alternately judges DCIO Lost or PUSCH NACK.

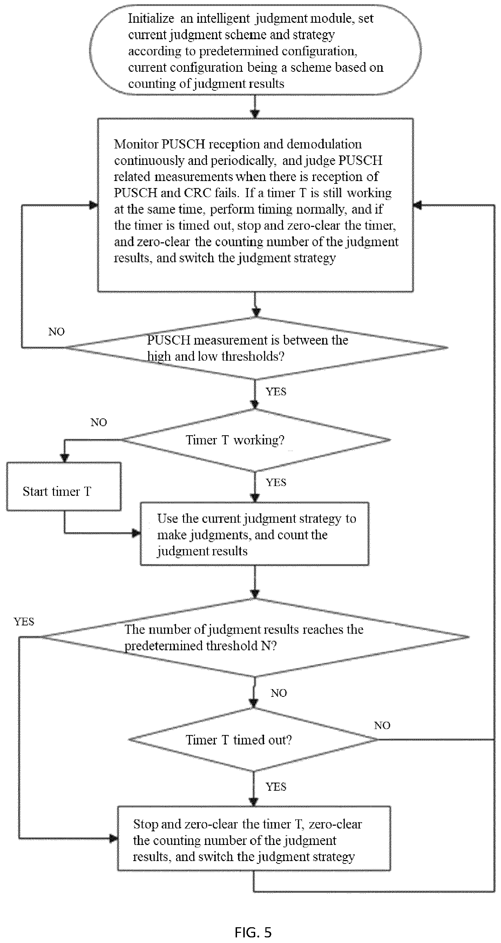

As shown in FIG. 5, in some embodiments, the intelligent judgment module can adopt an alternative switching judgment strategy based on judgment result counting.

The judgment strategy is divided into a judgment of DCIO Lost and a judgment of PUSCH NACK. The judgment strategy for the initial default configuration is DCIO Lost, i.e. the priority judgment is DCIO Lost. A timer of a time length T and a counter threshold N for counting the judgment result (DCIO Lost or PUSCH NACK) are set.

As shown in FIG. 5, when the timer T is in a clearing-stopped state, if the BS detects that the PUSCH NACK occurs in UE PUSCH and PUSCH measurement is between the double thresholds, the timer T will be triggered to start. Before the timer T is timed out, if the counted number of the double-threshold judgment results under the current judgment strategy reaches the threshold N, the other judgment strategy is switched to (i.e., if the current judgment is DCIO Lost, the judgment of PUSCH NACK is switched to, or if the current judgment is PUSCH NACK, the judgment of DCIO Lost is switched to), and the number of judgment results is cleared to zero, and the timer T is also cleared to zero and stopped. If the counted number of the double-threshold judgment results under the current judgment strategy does not reach the threshold N but the timer T is timed out, the timer T is also stopped and cleared to zero, the number of the judgment results is cleared to zero, and the judgment strategy is switched so as to return to the origin waiting for the situation of triggering the judgment to occur, that is, waiting for the situation that PUSCH NACK occurs and the PUSCH measurement is between the double thresholds occurs to occur. The timer T can be regarded as a valid period of the judgment result after the current judgment strategy is effective and started, and the threshold N can be regarded as the trustworthy upper limit of the judgment result after the current judgment strategy is effective and started.

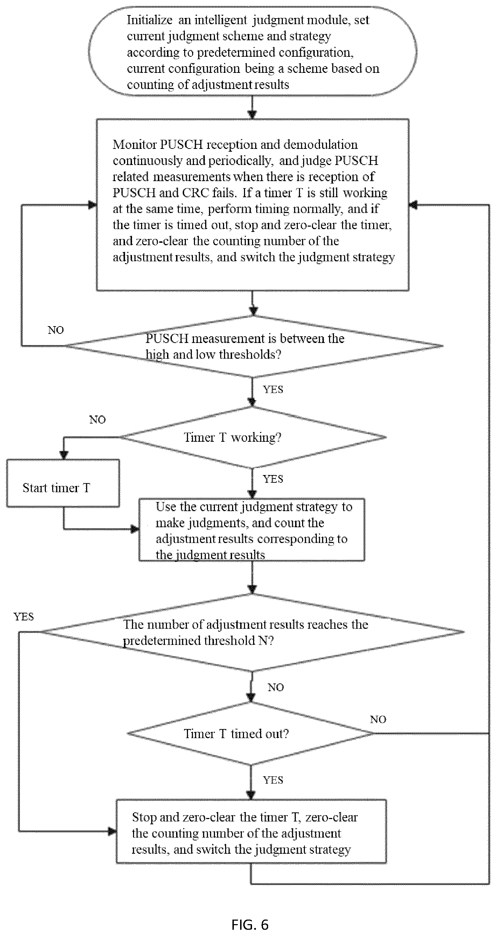

As shown in FIG. 6, in some embodiments, the intelligent judgment module can adopt an alternative switching judgment strategy based on adjustment result counting.

Similarly, the judgment strategy is divided into the judgment of DCIO Lost and the judgment of PUSCH NACK. The judgment strategy of the initial default configuration is DCIO Lost, that is, the priority judgment is DCIO Lost. A timer with a time length T and a counter threshold N of the adjustment result are set. Wherein, the adjustment result refers to the adjustment result corresponding to the judgment result input to the channel adaptive processing module, such as the adjustment result, made by the PDCCH ACAL, of the aggregation level or power of DCIO CCE (increasing the aggregation level or power) after the judgment is DCIO Lost and input to the PDCCH ACAL module, or the adjustment result, made by the PUSCH AMC, of the PUSCH MCS (decreasing the MCS order) after the judgment is PUSCH NACK and input to the PUSCH AMC module.

As shown in FIG. 6, when the timer T is in a clearing-stopped state, if the BS detects that the PUSCH NACK occurs in UE PUSCH and the PUSCH measurement is between the double thresholds, the timer T will be triggered to start. Before the timer T is timed out, if the counted number of the adjustment results corresponding to the double-threshold judgment results under the current judgment strategy reaches the threshold N, the other judgment strategy is switch to (i.e., if the current judgment is DCIO Lost, the judgment of PUSCH NACK is switched to for the next time, or if the current judgment is PUSCH NACK, the judgment of DCIO Lost is switched to for the next time), and the number of adjustment results is cleared to zero, and the timer T is also cleared to zero and stopped. If the counted number of the adjustment results corresponding to the double-threshold judgment results under the current judgment strategy does not reach the threshold N but the timer T is timed out, the timer T is also stopped and cleared to zero, the number of the adjustment results is cleared, and the judgment strategy is switched so as to return to the origin waiting for the situation of triggering the judgment to occur, that is, waiting for the situation that PUSCH NACK occurs and the PUSCH measurement is between the double thresholds to occur. The timer T can be regarded as a valid period of the judgment result after the current judgment strategy is effective and started, and the threshold N can be regarded as the adjustable upper amount limit of the corresponding adjustment result after the current judgment strategy is effective and started.

In the above two schemes, the first scheme is that the intelligent judgment module can directly obtain the judgment results from the internal for counting, which is convenient and quick, while the second scheme is that the intelligent judgment module needs to indirectly obtain the adjustment results from the external related channel adaptive processing modules (PDCCH ACAL, PUSCH AMC, PUSCH PC, and PUSCH HARQ) for counting, which has greater complexity and more overhead.

Usually, the adjustment result is determined based on the judgment result. For example, if the judgment is PUSCH NACK, it must be to adjust the PUSCH MCS, and if the judgment is DCIO Lost, it must be to adjust the PDCCH CCE. Therefore, the two schemes have the same effect in theory. However, in actual processing, the adjustment result may be affected by some other factors, including small probability factors of abnormal burst, for example, the adjustment has reached the upper and lower limits and can no longer be adjusted, or resources are limited such as other UEs preempt resources with higher priority, which leads to the failure to realize the adjustment this time, so the second scheme based on the adjustment result will be more accurate.

In practice, the first threshold and the second threshold may be dynamically adjusted, and in some examples, after the physical downlink control channel corresponding to the user equipment and the physical uplink shared channel corresponding to the user equipment are adjusted according to the judgment result, the method further includes: the counting number of each judgment result corresponding to that the first measurement value is within the preset range is counted; for the user equipment with a radio link maintained normal, after it is judged that the sum of the counting numbers of the two types of judgment results exceeds a sum threshold and the ratio of the counting number of the first judgment result to the counting number of the second judgment result is greater than a ratio threshold, the first threshold is increased, or both the first threshold and the second threshold are increased; and for the user equipment with a radio link maintained normal, after it is judged that the sum of the counting numbers of the two types of judgment results exceeds a sum threshold and the ratio of the counting number of the second judgment result to the counting number of the first judgment result is greater than a ratio threshold, the second threshold is decreased, or both the first threshold and the second threshold are decreased; wherein, the ratio threshold is greater than 1. With such setting, the UE can be returned to normal sooner by means of the judgment result of intelligent judgment.

In other examples, after the physical downlink control channel corresponding to the user equipment and the physical uplink shared channel corresponding to the user equipment are adjusted according to the judgment result, the method further includes: the counting number of each judgment result corresponding to that the first measurement value is within the preset range is counted; for the user equipment with an abnormal radio link, after it is judged that the sum of the counting numbers of the two types of judgment results exceeds a sum threshold and the ratio of the counting number of the first judgment result to the counting number of the second judgment result is greater than a ratio threshold, the second threshold is decreased, or both the first threshold and the second threshold are decreased; and for the user equipment with an abnormal radio link, after it is judged that the sum of the counting numbers of the two types of judgment results exceeds a sum threshold and the ratio of the counting number of the second judgment result to the counting number of the first judgment result is greater than a ratio threshold, the first threshold is increased, or both the first threshold and the second threshold are increased; wherein, the ratio threshold is greater than 1. With this setting, the judgment result of intelligent judgment can make the UE less prone to deterioration.

That is to say, the high and low double thresholds can be dynamically adjusted periodically according to the counting results of intelligent judgment, so as to realize feedback closed-loop adaptive optimization (for example, base stations with many abnormal failures and high drop rate of uplink radio links can turn on this function). If the UE service recovers faster or the UE service deteriorates less when the judgment is PUSCH NACK, the high threshold can be decreased or the high and low thresholds can be decreased as a whole, so that the probability of judging PUSCH NACK is higher; conversely, if the UE service recovers faster or the UE service deteriorates less when the judgment is DCIO Lost, the low threshold can be increased or the high and low thresholds can be increased as a whole, so that the probability of judging DCIO Lost is higher.

The above-described channel adaptative processing including intelligent judgment is at the UE level, i.e. each UE is done independently. The high and low thresholds are adjusted at the BS cell level and are uniformly adjusted by the BS to be valid for all UEs in the base station cell, rather than a separate set of high and low thresholds for each UE.

Specifically, the BS periodically summarizes and counts the number of two types of judgment results of all UEs entering intelligent judgment, and distinguishes them according to the final radio link state (divided into normal recovery and abnormal failure) of each UE in a corresponding time period (the timer T in the intelligent judgment can be adopted). For either state, if the sum of the number of two types of judgment results exceeds a predetermined threshold M, the sample number is considered to be sufficient and statistically significant. Then the ratio between the number of PUSCH NACK and the number of DCIO Lost (the large one is the numerator and the small one is the denominator) is calculated then. If the ratio exceeds a preset ratio threshold P (the ratio threshold P is not less than 1), it is considered that the two types of judgment results have significant differences on whether the radio link of UE service can be maintained or restored to normal, and it is necessary to optimize and adjust the high and low thresholds of intelligent judgment.

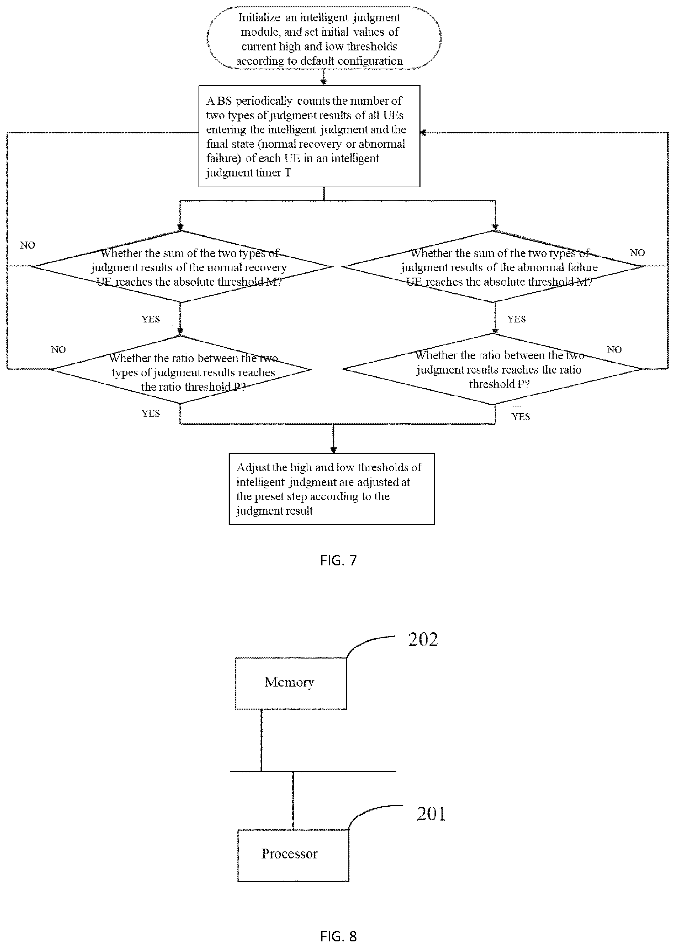

Optimal adjustment of the high and low thresholds is described below based on two states of the UE, as shown in FIG. 7.

For a UE whose radio link is maintained normal, if the sum of judgment results of the intelligent judgment reaches a threshold and the ratio of the number of PUSCH NACK to the number of DCIO Lost exceeds a threshold P, such as 200%, it is considered that the judgment of PUSCH NACK can make the UE return to normal faster (exit intelligent judgment), then the high threshold can be decreased or the high and low thresholds can be decreased as a whole, so that the probability of judging PUSCH NACK is higher. On the contrary, if the ratio of the number of DCIO Lost to the number of PUSCH NACK exceeds the threshold P, it is considered that the judgment of DCIO Lost can make the UE return to normal faster (exit intelligent judgment), then the low threshold can be increased or the high and low thresholds can be increased as a whole, so that the probability of judging DCIO Lost is higher.

For a UE whose radio link fails abnormally(such as the radio link is interrupted and dropped), if the number of judgment results of the intelligent judgment reaches a threshold M, and the ratio of the number of PUSCH NACK to the number of DCIO Lost exceeds a threshold P, such as 200%, it is considered that the judgment of PUSCH NACK can make the UE more prone to deterioration, then the low threshold can be increased or the high and low thresholds can be increased as a whole, so that the probability of judging PUSCH NACK is lower. On the contrary, if the ratio of the number of DCIO Lost to the number of PUSCH NACK exceeds the threshold P, it is considered that the judgment of DCIO Lost can make the UE more prone to deterioration, then the high threshold can be decreased or the high and low thresholds can be decreased as a whole, so that the probability of judging DCIO Lost is lower.

In general, all adjustment of the high and low thresholds aims to enable that the judgment results of the intelligent judgment make the UE return to normal faster or make the UE less prone to deterioration.

For ease of understanding, the following steps may be specifically included by way of illustration below.
(1) According to the characteristics of normal operation of actual typical services, the scheduling period is set to 20ms, i.e., the BS schedules the UE once every 20ms, i.e., the BS schedules the UE 50 times in 1 second.
(2) The target value of BLER for PUSCH AMC is set as 10%, i.e., 10 NACK and 90 ACK out of 100 PUSCH CRC results are expected. When the PUSCH is demodulated as ACK, PUSCH AMC increases PUSCH MCS by Δ*MCS*₁; when PUSCH is demodulated as NACK, PUSCH AMC decreases PUSCH MCS by Δ*MCS*₂; according to the above target value 10%of PUSCH BLER , the ratio of Δ*MCS*₁ to Δ*MCS*₂ is 10: 90, i.e., 1: 9, Δ*MCS*₁ = 0.11 may be set, after accumulating 9 ACK, MCS is increased by 1 order, Δ*MCS*₂=1 is set; and after accumulating 1 NACK, MCS is decreased by 1 order. Thus, when there are 5 NACK and 45 ACK in 50 PUSCH CRC results, i.e., the target BLER is reached, MCS is increased by 5 orders, and MCS is also decreased by 5 orders, and MCS is kept stable.
(3) The target value of DCI Lost of PDCCH ACAL is set to be 1%, i.e., 99 scheduling successes out of 100 PDCCH DCI scheduling results are expected, i.e., non DCI Lost, only 1 DCI Lost. When the judgment is non DCI Lost, PDCCH ACAL decreases the aggregation level of DCI CCE by Δ*CCE*₁; when the judgment is DCI Lost, PDCCH ACAL increases the aggregation level of DCI CCE by Δ*CCE*₂; according to the above DCI Lost target value of 1% and the ratio of Δ*CCE*₁ to Δ*CCE*₂ is 1: 99, Δ*CCE*₁ = 0.01 may be set, after accumulating 99 non DCI Lost, the CCE is decreased by 1 aggregation level, and the Δ*CCE*₂ is set to be 1; and after accumulating 1 DCI Lost, the CCE is increased by 1 aggregation level. Thus, when 1 DCI Lost and 99 non DCI Lost are out of 100 scheduling results in 2 seconds, i.e., the DCI Lost target value is reached, the CCE is increased by 1 aggregation level, and decreased by 1 aggregation level, and the aggregation level of CCE is kept stable.
(4) The timer T= 200ms is set , the counter threshold N of the judgment result or the adjustment result is 5.
(5) If the relevant measurement of the PUSCH employs the PSD, setting of the high and low thresholds is TH1 =-120dbm, TH2 =-125dbm; if the relevant measurement of the PUSCH employs the SINR, setting of the high and low thresholds is TH1 = 3dB, TH2 =-3dB; and the step of the high-low threshold adjustment is Δ*TH* = 1 dB.
(6) The period D of the high and low threshold adaptative adjustment is set to 1 hour, the absolute threshold of the sum of the number of two types of judgment results for intelligent judgment is M = 1000000 (reference can be made to 1% of the maximum schedulable number of PUSCH or 10% of the total scheduled number of PUSCH in the BS cell in the available counting period D), and the ratio threshold of the two types of judgment results is set to P = 200%.

It should be noted that the adjustment steps (MCS decreased step Δ*MCS*₂ and CCE increased step Δ*CCE*₂) corresponding to the judgment result between the double thresholds may be enlarged, for example, by one time, if performance recovery is slow due to the small number of judgments or adjustments under a certain judgment strategy in the double threshold interval.

In some embodiments, continuous PUSCH NACK bursts in certain UE when the PUSCH is continuously periodically scheduled within the BS, and the true situation is PUSCH NACK. The PUSCH measurement value (PSD/SINR) is always greater than the high threshold, and the result is judged as PUSCH NACK. The judgment result is input into PUSCH AMC and PUSCH PC, which adaptively reduces PUSCH MCS or improves PUSCH Power. Under the condition of stable service scene, it is expected that PUSCH ACK is made and service will return to normal at last.

In some embodiments, continuous PUSCH NACK bursts in certain UE when the PUSCH is continuously periodically scheduled within the BS, and the true situation is DCIO Lost. The PUSCH measurement value (PSD/SINR) is always smaller than the low threshold, and the result is judged as DCIO Lost. The judgment result is input into PDCCH ACAL, so as to adaptively improve the aggregation level/power of DCIO CCE. Under the condition of stable service scene, it is expected that the final UE can receive DCIO, and PUSCH ACK is made and the service will return to normal.

In some embodiments, continuous PUSCH NACK bursts in certain UE when the PUSCH is continuously periodically scheduled within the BS, and the true situation is PUSCH NACK. The PUSCH measurement value (PSD/SINR) is between high and low thresholds, the intelligent judgment process is entered, and the judgment results are alternately switched and output, namely PUSCH NACK or DCIO Lost, and the judgment result is input into PUSCH AMC, PUSCH PC and PDCCH ACAL. The BS adjusts the relevant new radio parameters (reducing PUSCH MCS, improving PUSCH Power and increasing DCIO CCE aggregation level/power) of the UE in turn. Under the condition of stable service scene, it is expected that PUSCH ACK is made and the service will return to normal at last.

In some embodiments, a continuous PUSCH NACK bursts in certain UE when the PUSCH is continuously periodically scheduled within the BS, and the true situation is DCIO Lost. The PUSCH measurement value (PSD/SINR) is between high and low thresholds, the intelligent judgment process is entered, and the judgment results are alternately switched and output, namely PUSCH NACK or DCIO Lost, and the judgment result is input into PUSCH AMC, PUSCH PC and PDCCH ACAL. The BS adjusts the relevant new radio parameters (reducing PUSCH MCS, improving PUSCH Power and increasing DCIO CCE aggregation level/power) of the UE in turn. Under the condition of stable service scene, it is expected that PUSCH ACK is made and the service will return to normal at last.

In some embodiments, the BS cell counts the number of two types of judgments of all the UEs entering the intelligent judgment and the final state of the UEs in the intelligent judgment timer T in the period D, and the counted results of the current period is shown in Table 1. The total number of judgments entering the intelligent judgment is 1500000, wherein the number of samples of the normal UE is 1200000, which is higher than the absolute threshold M = 1000000, so the number of samples of the normal UE is considered sufficiently high to have counting significance, and the number of samples of the abnormal UE is 300000, which does not reach the absolute threshold N = 1000000, which has no counting significance. The ratio of the number of DCIO Lost to the number of PUSCH NACK for the normal UE = 300%, which is greater than the ratio threshold P = 200%. This illustrates that there is significant difference between impact of the two types of judgment results on the radio link recovery of the UE service through the adaptive processing, so the high and low thresholds are adjusted to optimize the judgment strategy. According to the results of Table 1, it can be seen that the judgment of DCIO Lost is more favorable for the normal recovery of the UE radio link than the judgment of PUSCH NACK, so the low threshold TH2 or the high and low thresholds TH1/TH2 are both increased by 1 step Δ*TH* = 1 dB, making it easier to make the judgment of DCIO Lost.

**Table 1**

| UE state and intelligent judgment result counting | PUSCH NACK | DCIO Lost |
|---|---|---|
| UE with normal recovery of radio link | 300000 | 900000 |
| UE with abnormal failure of radio link | 200000 | 100000 |

In some embodiments, the BS cell counts the number of two types of judgments of all the UEs entering the intelligent judgment and the final state of the UEs in the intelligent judgment timer T in the period D, and the counted result of the current period is shown in Table 2. The total number of judgments entering the intelligent judgment is 1500000, wherein the number of samples of the normal UE is 300000, which is lower than the absolute threshold M = 1000000, so the number of samples of the normal UE has no counting significance, and the number of samples of the abnormal UE is 1200000, which is higher than the absolute threshold M = 1000000, which is considered sufficiently high to have the counting significance. The ratio of the number of PUSCH NACK to the number of DCIO Lost for the abnormal UE = 300%, which is greater than the ratio threshold P = 200%. This illustrates that there is a significant difference between impact of the two types judgment results on the radio link deterioration of the UE service through the adaptive processing, so the high and low thresholds are adjusted to optimize the judgment strategy. According to the results of Table 2, it can be seen that the judgment of PUSCH NACK is more likely to cause abnormal failure of the UE radio link than the judgment of DCIO Lost, so the low threshold TH2 or the high and low thresholds TH1/TH2 are both increased by 1 step Δ*TH* = 1 dB, which makes it more difficult to judge PUSCH NACK, that is, it is easier to judge DCIO Lost.

**Table 2**

| UE state and intelligent judgment result counting | PUSCH NACK | DCIO Lost |
|---|---|---|
| UE with normal recovery of radio link | 100000 | 200000 |
| UE with abnormal failure of radio link | 900000 | 300000 |

In some embodiments, the BS cell counts the number of two types judgments of all the UEs entering intelligent judgment and the final state of the UEs in the intelligent judgment timer T in the period D, and the counted result of the current period is shown in Table 3. The total number of judgments entering the intelligent judgment is 3000000, wherein the number of samples of the normal UE is 1800000, which is higher than the absolute threshold M = 1000000, so the number of samples of the normal UE is considered to have counting significance, and the number of samples of the abnormal UE is 1200000, which is also higher than the absolute threshold M = 1000000, which also has the counting significant. The ratio of the number of DCIO Lost to the number of PUSCH NACK for the normal UE = 200%, which reaches the ratio threshold P = 200%. The ratio of the number of PUSCH NACK to the number of DCIO Lost for the abnormal UE = 300%, which is greater than the ratio threshold P = 200%. This illustrates that there is significant difference between impact of the two types of judgment results on the radio link recovery or deterioration of the UE service through the adaptive processing, so the high and low thresholds are adjusted to optimize the judgment strategy. According to the results of Table 3, it can be seen that the judgment of DCIO Lost is more favorable for the normal recovery of the UE radio link and reduction of the abnormal failure of the UE radio link than the judgment of PUSCH NACK, the counted results of normal UE and abnormal UE have the same trend and the effects are superimposed, so the low threshold TH2 or the high and low threshold TH1/TH2 can be increased by 2 steps Δ*TH*, that is, 2dB, which makes it easier to judge DCIO Lost.

**Table 3**

| UE state and intelligent judgment result counting | PUSCH NACK | DCIO Lost |
|---|---|---|
| UE with normal recovery of radio link | 600000 | 1200000 |
| UE with abnormal failure of radio link | 900000 | 300000 |

In some embodiments, the BS cell counts the number of two types of judgments of all the UEs entering the intelligent judgment and the final state of the UE in the intelligent judgment timer T in the period D, the counted result of the current period is shown in Table 4. The total number of judgments entering the intelligent judgment is 3000000, wherein the number of samples of the normal UE is 1800000, which is higher than the absolute threshold M = 1000000, so the number of samples of the normal UE is considered to have counting significance, and the number of samples of the abnormal UE is 1200000, which is also higher than the absolute threshold M = 1000000, which also has counting significance. The ratio of the number of DCIO Lost to the number of PUSCH NACK for the normal UE = 200%, which reaches the ratio threshold P = 200%. The ratio of the number of DCIO Lost to the number of PUSCH NACK for the abnormal UE = 300%, which is higher than the ratio threshold P = 200%. This illustrates that there is a significantly difference between impact of the two types of judgment results on the radio link recovery or deterioration of the UE service through the adaptive processing, so the high and low thresholds are adjusted. But, according to the results of Table 4, for the normal UE, it can be seen that the judgment of DCIO Lost is more favorable for the normal recovery of the UE radio link than the judgment of PUSCH NACK, while for the abnormal UE, the judgment of DCIO Lost is more likely to lead to abnormal failure of the UE radio link than the judgment of PUSCH NACK. The counted results of normal UE and abnormal UE have opposite trends and the effects are offset, so the high and low thresholds are not adjusted this time.

**Table 4**

| UE state and intelligent judgment result counting | PUSCH NACK | DCIO Lost |
|---|---|---|
| UE with normal recovery of radio link | 600000 | 1200000 |
| UE with abnormal failure of radio link | 300000 | 900000 |

In the embodiments, the specific definitions of nouns are shown in Table 5.

**Table 5**

| Abbreviations | Full English name |
|---|---|
| BS | Base Station |
| UE | User equipment |
| PDCCH | Physical downlink control channel |
| DCI | Downlink Control Information |
| CCE | Control channel element |
| CRC | Cyclic redundancy check |
| MCS | Modulation and coding scheme |
| RI | Rank indicator |
| RB | resource block |
| PDSCH | Physical downlink shared channel |
| PUCCH | Physical uplink control channel |
| PUSCH | Physical uplink shared channel |
| PSD | Power spectral density |
| SINR | Signal to Interference plus Noise Ratio |
| ACK | Acknowledgement |
| NACK | Negative Acknowledgement |
| DTX | Discontinous Transmission |
| BLER | Block Error Ratio |
| ACAL | Adaptive CCE Aggregation Level |
| AMC | Adaptive Modulation and Coding |
| PC | Power Control |
| HARQ | Hybrid Automatic Request Request |
| CAL | CCE Aggregation Level |

The channel adaptive processing method provided by the embodiment improves the conventional single threshold judgment method in the industry for judging whether DCIO Lost appears based on PUSCH measurement in the 4G/5G channel adaptive processing into a double threshold judgment method including a high threshold and a low threshold. When the measurement value of PUSCH is between the high threshold and the low threshold, the intelligent judgment mode of alternative switching of judgment strategy is adopted, and the high threshold and the low threshold can be dynamically adjusted periodically according to the statistical result of the intelligent judgment to realize adaptive optimization. Therefore, it is more flexible to deal with the ambiguous region (between high threshold and low threshold) in which the judgment result is probabilistically erroneous, so that the judgment result and the corresponding channel adaptive processing are more reasonable and reliable, and the problem that the UE service is continuously deteriorated and interrupted due to continuous misjudgment in some scenarios caused by the single threshold judgment method is avoided.

The step division of the above methods is only for the sake of clear description, and the steps can be combined into one step or some steps are split into multiple steps when implemented, as long as the same logical relationship is included, it is within the protection scope of this patent; and insignificant modifications or introducing insignificant designs which are added into algorithms or processes without changing the core designs of their algorithms and processes are within the scope of protection of this patent.

A second embodiment of the present application relates to a base station, as shown in FIG. 8, which includes at least one processor 201, and a memory 202 communicatively connected with the at least one processor 201, wherein the memory 202 stores instructions executable by the at least one processor 201, the instructions being executed by the at least one processor 201 to enable the at least one processor 201 to perform the channel adaptive processing method as described above.

Wherein, the memory 202 and the processor 201 are connected by way of a bus, and the bus may include any number of interconnecting buses and bridges that connect together the various circuits of the one or more processors 201 and the memory 202. The bus may also connect together various other circuits such as peripherals, voltage regulators, and power management circuits, which are well known in the art, and therefore, will not be described any further herein. A bus interface provides an interface between a bus and a transceiver. The transceiver may be one element or multiple elements, such as multiple receivers and transmitters, that provide a unit for communicating with various other apparatuses over a transmission medium. The data processed by the processor 201 is transmitted over a wireless medium through the antenna, which further receives the data and sends the data to the processor 201.

The processor 201 is responsible for managing the bus and general processing, and may also provide various functions including timing, peripheral interfaces, voltage regulation, power management and other control functions. While the memory 202 may be used for storing data used by the processor 201 in performing operations.

Since the first embodiment corresponds to the present embodiment, the present embodiment can be implemented in cooperation with the first embodiment. The relevant technical details mentioned in the first embodiment are still valid in this embodiment, and the technical effects that can be achieved in the first embodiment can also be achieved in this embodiment, which will not be described in detail here in order to reduce repetition. Correspondingly, the relevant technical details mentioned in this embodiment may also be applied in the first embodiment.

A third embodiment of the present application relates to a computer-readable storage medium storing a computer program which, when executed by a processor, implements the above described embodiments of the channel adaptive processing method.

That is, it can be understood by those skilled in the art that, implementation of all or a portion of the steps of the methods of the embodiments described above may be accomplished by instructing related hardware through a program stored in a storage medium, including instructions for causing a device (which may be a single chip microcomputer, a chip, etc.) or a processor to perform all or part of the steps of the methods of the various embodiments of the present application. The aforementioned storage media includes a U disk, a removable hard disk, a Read-Only Memory (ROM), a Random Access Memory (RAM), a magnetic disk or an optical disk and other media capable of storing program codes.

It will be understood by those of ordinary skill in the art that the above-described embodiments are specific examples for carrying out the present application, and in practice, various changes in form and detail may be made therein without departing from and scope of the present application, as defined by the attached claims.

## Claims

1. A channel adaptive processing method, comprising:
sending (S11) downlink control information to a user equipment by means of a physical downlink control channel;
receiving and demodulating (S12) a physical uplink shared channel of the user equipment, and performing cyclic redundancy check on the physical uplink shared channel;
judging, upon the condition that a check result of the cyclic redundancy check is negative acknowledgement, whether a first measurement value of the physical uplink shared channel is within a preset range, wherein the preset range is greater than or equal to a first threshold and smaller than or equal to a second threshold; **characterised by**:
switching (S13), upon the condition that the first measurement value is within the preset range, and that a current judgment result is executed for a preset duration or a counting number reaches a preset number of times, a judgment result, wherein the counting number is a number of times the current judgment result is executed or a number of times an adjustment result corresponding to the current judgment result occurs, switching the judgment result is switching output between a first judgment result and a second judgment result , the first judgment result indicating that the downlink control information is lost, and the second judgment result indicating that the downlink control information is not lost; and
adjusting (S14), according to the judgment result, the physical downlink control channel corresponding to the user equipment and the physical uplink shared channel corresponding to the user equipment.

2. The channel adaptive processing method according to claim 1, wherein after judging whether the first measurement value of the physical uplink shared channel is within the preset range, the method further comprises:
outputting, upon the condition that the first measurement value is greater than the second threshold, the second judgment result.

3. The channel adaptive processing method according to claim 1, wherein after judging whether the first measurement value of the physical uplink shared channel is within the preset range, the method further comprises:
outputting, upon the condition that the first measurement value is smaller than the first threshold, the first judgment result.

4. The channel adaptive processing method according to claim 1, wherein the first measurement value comprises a power spectral density or a signal to interference plus noise ratio.

5. The channel adaptive processing method according to claim 1, wherein receiving and demodulating (S12) the physical uplink shared channel of the user equipment comprises:
continuously receiving and demodulating the physical uplink shared channel of the user equipment; and
switching (S13), upon the condition that the first measurement value is within the preset range, and that the current judgment result is executed for the preset duration or the counting number reaches the preset number of times, the judgment result, comprises:
judging, each time after the first measurement value is judged to be within the preset range, whether a timer is started; and upon the condition that the timer is started, outputting the current judgment result and counting the counting number of the current judgment result; or upon the condition that the timer is not started, starting the timer, outputting the current judgment result, and counting the counting number of the current judgment result; and
after a timing duration of the timer reaches the preset duration, or the counting number reaches the preset number of times, switching the judgment result, and zero-clearing the counting number and the timing duration.

6. The channel adaptive processing method according to claim 1, wherein receiving and demodulating (S12) the physical uplink shared channel of the user equipment comprises:
continuously receiving and demodulating the physical uplink shared channel of the user equipment; and
switching (S13), upon the condition that the first measurement value is within the preset range, and that the current judgment result is executed for the preset duration or the counting number reaches the preset number of times, the judgment result, comprises:
judging, each time after the first measurement value is judged to be within the preset range, whether a timer is started; and upon the condition that the timer is started, outputting the current judgment result and counting the counting number of the adjustment result corresponding to the current judgment result; or upon the condition that the timer is not started, starting the timer, outputting the current judgment result, and counting the counting number of the adjustment result corresponding to the current judgment result; and
after a timing duration of the timer reaches the preset duration, or the counting number reaches the preset number of times, switching the judgment result, and zero-clearing the counting number and the timing duration.

7. The channel adaptive processing method according to claim 1, wherein, switching (S13), upon the condition that the first measurement value is within the preset range, the judgment result comprises:
outputting, in an initial default state, the first judgment result first.

8. The channel adaptive processing method according to claim 1, wherein after adjusting (S14), according to the judgment result, the physical downlink control channel corresponding to the user equipment and the physical uplink shared channel corresponding to the user equipment, the method further comprises:
counting a counting number of each type of judgment result corresponding to that the first measurement value is within the preset range; and
for the user equipment with a radio link maintained normal, increasing the first threshold, or increasing both the first threshold and the second threshold after that a sum of the counting numbers of the two types of judgment results is judged to exceed a sum threshold and that a ratio of the counting number of the first judgment result to the counting number of the second judgment result is judged to be greater than a ratio threshold;
wherein, the ratio threshold is greater than 1.

9. The channel adaptive processing method according to claim 1, wherein after adjusting (S14), according to the judgment result, the physical downlink control channel corresponding to the user equipment and the physical uplink shared channel corresponding to the user equipment, the method further comprises:
counting a counting number of each type of judgment result corresponding to that the first measurement value is within the preset range; and
for the user equipment with a radio link maintained normal, decreasing the second threshold, or decreasing both the first threshold and the second threshold after that a sum of the counting numbers of the two types of judgment results is judged to exceed a sum threshold and that the ratio of the counting number of the second judgment result to the counting number of the first judgment result is judged to be greater than a ratio threshold;
wherein, the ratio threshold is greater than 1.

10. The channel adaptive processing method according to claim 1, wherein after adjusting (S14), according to the judgment result, the physical downlink control channel corresponding to the user equipment and the physical uplink shared channel corresponding to the user equipment, the method further comprises:
counting a counting number of each type of judgment result corresponding to that the first measurement value is within the preset range; and
for the user equipment with an abnormal radio link, decreasing the second threshold, or decreasing both the first threshold and the second threshold after that a sum of the counting numbers of the two types of judgment results is judged to exceed a sum threshold and that a ratio of the counting number of the first judgment result to the counting number of the second judgment result is judged to be greater than a ratio threshold;
wherein, the ratio threshold is greater than 1.

11. The channel adaptive processing method according to claim 1, wherein after adjusting (S14), according to the judgment result, the physical downlink control channel corresponding to the user equipment and the physical uplink shared channel corresponding to the user equipment, the method further comprises:
counting a counting number of each type of judgment result corresponding to that the first measurement value is within the preset range; and
for the user equipment with an abnormal radio link, increasing the first threshold, or decreasing both the first threshold and the second threshold after that a sum of the counting numbers of the two judgment results is judged to exceed a sum threshold and that a ratio of the counting number of the second judgment result to the counting number of the first judgment result is judged to be greater than a ratio threshold;
wherein, the ratio threshold is greater than 1.

12. A base station, comprising:
at least one processor (201); and,
a memory (202) communicatively connected with the at least one processor (201); wherein,
the memory (202) stores instructions executable by the at least one processor (201), the instructions being executed by the at least one processor (201) to perform the channel adaptive processing method of any one of claims 1 to 11.

13. A computer-readable storage medium storing a computer program, wherein the computer program implements the channel adaptive processing method of any one of claims 1 to 11 when executed by a processor.

## Patentansprüche

1. Kanaladaptives Verarbeitungsverfahren, umfassend:
Senden (S11) von Downlink-Steuerinformationen an eine Benutzerausrüstung mittels eines physischen Downlink-Steuerkanals;
Empfangen und Demodulieren (S12) eines physikalischen gemeinsamen Uplink-Kanals der Benutzerausrüstung und Durchführen von zyklischen Redundanzprüfung auf dem physikalischen gemeinsamen Uplink-Kanal;
Beurteilen, unter der Bedingung, dass ein Prüfergebnis der zyklischen Redundanzprüfung eine negative Bestätigung ist, ob ein erster Messwert des physikalischen gemeinsamen Uplink-Kanals innerhalb eines voreingestellten Bereichs liegt, wobei der voreingestellte Bereich größer oder gleich einem ersten Schwellenwert und kleiner oder gleich einem zweiten Schwellenwert ist; **gekennzeichnet durch**:
Umschalten (S13) eines Beurteilungsergebnisses, unter der Bedingung, dass der erste Messwert innerhalb des voreingestellten Bereichs liegt, und dass ein aktuelles Beurteilungsergebnis für eine voreingestellte Dauer ausgeführt wird oder eine Zählzahl eine voreingestellte Anzahl von Malen erreicht, wobei die Zählzahl eine Anzahl von Ausführungen des aktuellen Beurteilungsergebnisses oder eine Anzahl von Auftreten eines dem aktuellen Beurteilungsergebnis entsprechenden Anpassungsergebnisses ist, wobei Umschalten des Beurteilungsergebnisses Umschalten von Ausgabe zwischen einem ersten Beurteilungsergebnis und einem zweiten Beurteilungsergebnis ist, wobei das erste Beurteilungsergebnis anzeigt, dass die Downlink-Steuerinformationen verloren gegangen sind und das zweite Beurteilungsergebnis anzeigt, dass die Downlink-Steuerinformationen nicht verloren gegangen sind; und
Anpassen (S14), gemäß dem Beurteilungsergebnis, des physischen Downlink-Steuerkanals, der der Benutzerausrüstung entspricht, und des physischen gemeinsamen Uplink-Kanals, der der Benutzerausrüstung entspricht.

2. Kanaladaptives Verarbeitungsverfahren nach Anspruch 1, wobei nach Beurteilen, ob der erste Messwert des physikalischen gemeinsamen Uplink-Kanals innerhalb des voreingestellten Bereichs liegt, das Verfahren weiter Folgendes umfasst:
Ausgeben des zweiten Beurteilungsergebnisses unter der Bedingung, dass der erste Messwert größer als der zweite Schwellenwert ist.

3. Kanaladaptives Verarbeitungsverfahren nach Anspruch 1, wobei nach Beurteilen, ob der erste Messwert des physikalischen gemeinsamen Uplink-Kanals innerhalb des voreingestellten Bereichs liegt, das Verfahren weiter Folgendes umfasst:
Ausgeben des zweiten Beurteilungsergebnisses unter der Bedingung, dass der erste Messwert kleiner als der erste Schwellenwert ist.

4. Kanaladaptives Verarbeitungsverfahren nach Anspruch 1, wobei der erste Messwert eine spektrale Leistungsdichte oder ein Verhältnis von Signal zu Interferenz plus Rauschen umfasst.

5. Kanaladaptives Verarbeitungsverfahren nach Anspruch 1, wobei Empfangen und Demodulieren (S12) des physikalischen gemeinsamen Uplink-Kanals der Benutzerausrüstung Folgendes umfasst:
kontinuierliches Empfangen und Demodulieren des physikalischen gemeinsamen Uplink-Kanals der Benutzerausrüstung; und
Umschalten (S13) des Beurteilungsergebnisses, unter der Bedingung, dass der erste Messwert innerhalb des voreingestellten Bereichs liegt und das aktuelle Beurteilungsergebnis für die voreingestellte Dauer ausgeführt wird oder die Zählzahl die voreingestellte Anzahl an Malen erreicht, Folgendes umfasst:
Beurteilen, jedes Mal, nachdem der erste Messwert als innerhalb des voreingestellten Bereichs liegend beurteilt wurde, ob ein Timer gestartet wurde; und unter der Bedingung, dass der Timer gestartet wurde, Ausgeben des aktuellen Beurteilungsergebnisses und Zählen der Zählzahl des aktuellen Beurteilungsergebnisses; oder unter der Bedingung, dass der Timer nicht gestartet wurde, Starten des Timers, Ausgeben des aktuellen Beurteilungsergebnisses und Zählen der Zählzahl des aktuellen Beurteilungsergebnisses; und
nachdem eine Zeitdauer des Timers die voreingestellte Dauer erreicht oder die Zählzahl die voreingestellte Anzahl von Malen erreicht, Umschalten des Beurteilungsergebnisses und auf Null setzen der Zählzahl und der Zeitdauer.

6. Kanaladaptives Verarbeitungsverfahren nach Anspruch 1, wobei Empfangen und Demodulieren (S12) des physikalischen gemeinsamen Uplink-Kanals der Benutzerausrüstung Folgendes umfasst:
kontinuierliches Empfangen und Demodulieren des physikalischen gemeinsamen Uplink-Kanals der Benutzerausrüstung; und
Umschalten (S13) des Beurteilungsergebnisses, unter der Bedingung, dass der erste Messwert innerhalb des voreingestellten Bereichs liegt und das aktuelle Beurteilungsergebnis für die voreingestellte Dauer ausgeführt wird oder die Zählzahl die voreingestellte Anzahl an Malen erreicht, Folgendes umfasst:
Beurteilen, jedes Mal, nachdem der erste Messwert als innerhalb des voreingestellten Bereichs liegend beurteilt wurde, ob ein Timer gestartet wurde; und unter der Bedingung, dass der Timer gestartet wurde, Ausgeben des aktuellen Beurteilungsergebnisses und Zählen der Zählzahl des Anpassungsergebnisses, das dem aktuellen Beurteilungsergebnis entspricht; oder unter der Bedingung, dass der Timer nicht gestartet wurde, Starten des Timers, Ausgeben des aktuellen Beurteilungsergebnisses und Zählen der Zählzahl des Anpassungsergebnisses, das dem aktuellen Beurteilungsergebnis entspricht; und
nachdem eine Zeitdauer des Timers die voreingestellte Dauer erreicht oder die Zählzahl die voreingestellte Anzahl von Malen erreicht, Umschalten des Beurteilungsergebnisses und auf Null setzen der Zählzahl und der Zeitdauer.

7. Kanaladaptives Verarbeitungsverfahren nach Anspruch 1, wobei Umschalten (S13) des Beurteilungsergebnisses, unter der Bedingung, dass der erste Messwert innerhalb des voreingestellten Bereichs liegt, Folgendes umfasst:
Ausgeben in einem anfänglichen Standardzustand zuerst des ersten Beurteilungsergebnisses.

8. Kanaladaptives Verarbeitungsverfahren nach Anspruch 1, wobei nach Anpassen (S14) gemäß dem Beurteilungsergebnis des der Benutzerausrüstung entsprechenden physikalischen Downlink-Steuerkanals und des der Benutzerausrüstung entsprechenden physikalischen gemeinsamen Uplink-Kanal, das Verfahren weiter Folgendes umfasst:
Zählen einer Zählzahl von jedem Typ von Beurteilungsergebnis, das dem entspricht, dass der erste Messwert innerhalb des voreingestellten Bereichs liegt; und
für die Benutzerausrüstung mit einer normal erhaltenen Funkverbindung, Erhöhen des ersten Schwellenwerts oder Erhöhen sowohl des ersten als auch des zweiten Schwellenwerts, nachdem eine Summe der Zählzahlen der beiden Arten von Beurteilungsergebnissen als einen Summenschwellenwert überschreitend beurteilt wurde und ein Verhältnis der Zählzahl des ersten Beurteilungsergebnisses zur Zählzahl des zweiten Beurteilungsergebnisses als größer als ein Verhältnisschwellenwert beurteilt wurde;
wobei der Verhältnisschwellenwert größer als 1 ist.

9. Kanaladaptives Verarbeitungsverfahren nach Anspruch 1, wobei nach Anpassen (S14) gemäß dem Beurteilungsergebnis des der Benutzerausrüstung entsprechenden physikalischen Downlink-Steuerkanals und des der Benutzerausrüstung entsprechenden physikalischen gemeinsamen Uplink-Kanal, das Verfahren weiter Folgendes umfasst:
Zählen einer Zählzahl von jedem Typ von Beurteilungsergebnis, das dem entspricht, dass der erste Messwert innerhalb des voreingestellten Bereichs liegt; und
für die Benutzerausrüstung mit einer normal erhaltenen Funkverbindung, Verringern des zweiten Schwellenwerts oder Verringern sowohl des ersten als auch des zweiten Schwellenwerts, nachdem eine Summe der Zählzahlen der beiden Arten von Beurteilungsergebnissen als einen Summenschwellenwert überschreitend beurteilt wurde und das Verhältnis der Zählzahlen des ersten Beurteilungsergebnisses zu den Zählzahlen des zweiten Beurteilungsergebnisses als einen Verhältnisschwellenwert überschreitend beurteilt wurde;
wobei der Verhältnisschwellenwert größer als 1 ist.

10. Kanaladaptives Verarbeitungsverfahren nach Anspruch 1, wobei nach Anpassen (S14) gemäß dem Beurteilungsergebnis des der Benutzerausrüstung entsprechenden physikalischen Downlink-Steuerkanals und des der Benutzerausrüstung entsprechenden physikalischen gemeinsamen Uplink-Kanal, das Verfahren weiter Folgendes umfasst:
Zählen einer Zählzahl von jedem Typ von Beurteilungsergebnis, das dem entspricht, dass der erste Messwert innerhalb des voreingestellten Bereichs liegt; und
bei der Benutzerausrüstung mit einer anormalen Funkverbindung, Verringern des zweiten Schwellenwerts oder Verringern sowohl des ersten Schwellenwerts als auch des zweiten Schwellenwerts, nachdem eine Summe der Zählzahlen der beiden Beurteilungsergebnisse als einen Summenschwellenwert überschreitend beurteilt wurde und ein Verhältnis der Zählzahlen des ersten Beurteilungsergebnisses zu den Zählzahlen des zweiten Beurteilungsergebnisses als einen Verhältnisschwellenwert überschreitend beurteilt wurde;
wobei der Verhältnisschwellenwert größer als 1 ist.

11. Kanaladaptives Verarbeitungsverfahren nach Anspruch 1, wobei nach Anpassen (S14) gemäß dem Beurteilungsergebnis des der Benutzerausrüstung entsprechenden physikalischen Downlink-Steuerkanals und des der Benutzerausrüstung entsprechenden physikalischen gemeinsamen Uplink-Kanal, das Verfahren weiter Folgendes umfasst:
Zählen einer Zählzahl von jedem Typ von Beurteilungsergebnis, das dem entspricht, dass der erste Messwert innerhalb des voreingestellten Bereichs liegt; und
bei der Benutzerausrüstung mit einer anormalen Funkverbindung, Erhöhen des zweiten Schwellenwerts oder Verringern sowohl des ersten Schwellenwerts als auch des zweiten Schwellenwerts, nachdem eine Summe der Zählzahlen der beiden Beurteilungsergebnisse als einen Summenschwellenwert überschreitend beurteilt wurde und ein Verhältnis der Zählzahlen des ersten Beurteilungsergebnisses zu den Zählzahlen des zweiten Beurteilungsergebnisses als einen Verhältnisschwellenwert überschreitend beurteilt wurde;
wobei der Verhältnisschwellenwert größer als 1 ist.

12. Basisstation, umfassend:
mindestens einen Prozessor (201); und
einen Speicher (202), der mit dem mindestens einem Prozessor (201) kommunikativ verbunden ist;
wobei
der Speicher (202) Anweisungen speichert, die von dem mindestens einen Prozessor (201) ausgeführt werden können, wobei die Anweisungen von dem mindestens einen Prozessor (201) ausgeführt werden, um das kanaladaptive Verarbeitungsverfahren nach einem der Ansprüche 1 bis 11 durchzuführen.

13. Computerlesbares Speichermedium, das ein Computerprogramm speichert, wobei das Computerprogramm das kanaladaptive Verarbeitungsverfahren nach einem der Ansprüche 1 bis 11 implementiert, wenn es von einem Prozessor ausgeführt wird.

## Revendications

1. Procédé de traitement adaptatif de canal, comprenant :
l'envoi (S11) d'informations de commande de liaison descendante à un équipement utilisateur au moyen d'un canal physique de commande de liaison descendante ;
la réception et la démodulation (S12) d'un canal physique partagé de liaison montante de l'équipement utilisateur, et la réalisation d'un contrôle de redondance cyclique sur le canal physique partagé de liaison montante ;
l'évaluation, à condition qu'un résultat de contrôle du contrôle de redondance cyclique soit un accusé de réception négatif, pour établir si une première valeur de mesure du canal physique partagé de liaison montante se situe dans une plage prédéfinie, dans lequel la plage prédéfinie est supérieure ou égale à un premier seuil et inférieure ou égale à un second seuil ; **caractérisé par** :
la commutation (S13), à condition que la première valeur de mesure se situe dans la plage prédéfinie, et qu'un résultat d'évaluation courant soit exécuté pendant une durée prédéfinie ou qu'un nombre compté atteigne un nombre prédéfini de fois, d'un résultat d'évaluation, dans lequel le nombre compté est un nombre de fois où le résultat d'évaluation courant est exécuté ou un nombre de fois où un résultat d'ajustement correspondant au résultat d'évaluation courant se produit, la commutation du résultat d'évaluation consiste à commuter la sortie entre un premier résultat d'évaluation et un second résultat d'évaluation, le premier résultat d'évaluation indiquant que les informations de commande de liaison descendante sont perdues, et le second résultat d'évaluation indiquant que les informations de commande de liaison descendante ne sont pas perdues ; et
l'ajustement (S14), selon le résultat d'évaluation, du canal physique de commande de liaison descendante correspondant à l'équipement utilisateur et du canal physique partagé de liaison montante correspondant à l'équipement utilisateur.

2. Procédé de traitement adaptatif de canal selon la revendication 1, dans lequel, après avoir établi par évaluation si la première valeur de mesure du canal physique partagé de liaison montante se situe dans la plage prédéfinie, le procédé comprend en outre :
la sortie, à condition que la première valeur de mesure soit supérieure au second seuil, du second résultat d'évaluation.

3. Procédé de traitement adaptatif de canal selon la revendication 1, dans lequel, après avoir établi par évaluation si la première valeur de mesure du canal physique partagé de liaison montante se situe dans la plage prédéfinie, le procédé comprend en outre :
la sortie, à condition que la première valeur de mesure soit inférieure au premier seuil, du premier résultat d'évaluation.

4. Procédé de traitement adaptatif de canal selon la revendication 1, dans lequel la première valeur de mesure comprend une densité spectrale de puissance ou un rapport signal sur interférence plus bruit.

5. Procédé de traitement adaptatif de canal selon la revendication 1, dans lequel la réception et la démodulation (S12) du canal physique partagé de liaison montante de l'équipement utilisateur comprennent :
la réception et la démodulation continues du canal physique partagé de liaison montante de l'équipement utilisateur ; et
la commutation (S13), à condition que la première valeur de mesure se situe dans la plage prédéfinie, et que le résultat d'évaluation courant soit exécuté pendant la durée prédéfinie ou que le nombre compté atteigne le nombre prédéfini de fois, du résultat d'évaluation, comprend :
l'évaluation, après chaque fois que la première valeur de mesure a été évaluée comme se situant dans la plage prédéfinie, pour établir si un compteur est lancé ; et, à condition que le compteur soit lancé, la sortie du résultat d'évaluation courant et le comptage du nombre compté du résultat d'évaluation courant ; ou, à condition que le compteur ne soit pas lancé, le lancement du compteur, la sortie du résultat d'évaluation courant et le comptage du nombre compté du résultat d'évaluation courant ; et
une fois que la durée de temporisation du compteur a atteint la durée prédéfinie, ou que le nombre compté a atteint le nombre prédéfini de fois, la commutation du résultat d'évaluation, et la remise à zéro du nombre compté et de la durée de temporisation.

6. Procédé de traitement adaptatif de canal selon la revendication 1, dans lequel la réception et la démodulation (S12) du canal physique partagé de liaison montante de l'équipement utilisateur comprennent :
la réception et la démodulation continues du canal physique partagé de liaison montante de l'équipement utilisateur ; et
la commutation (S13), à condition que la première valeur de mesure se situe dans la plage prédéfinie, et que le résultat d'évaluation courant soit exécuté pendant la durée prédéfinie ou que le nombre compté atteigne le nombre prédéfini de fois, du résultat d'évaluation, comprend :
l'évaluation, après chaque fois que la première valeur de mesure a été évaluée comme se situant dans la plage prédéfinie, pour établir si un compteur est lancé ; et, à condition que le compteur soit lancé, la sortie du résultat d'évaluation courant et le comptage du nombre compté du résultat d'ajustement correspondant au résultat d'évaluation courant ; ou, à condition que le compteur ne soit pas lancé, le lancement du compteur, la sortie du résultat d'évaluation courant et le comptage du nombre compté du résultat d'ajustement correspondant au résultat d'évaluation courant ; et
une fois que la durée de temporisation du compteur a atteint la durée prédéfinie, ou que le nombre compté a atteint le nombre prédéfini de fois, la commutation du résultat d'évaluation, et la remise à zéro du nombre compté et de la durée de temporisation.

7. Procédé de traitement adaptatif de canal selon la revendication 1, dans lequel la commutation (S13), à condition que la première valeur de mesure se situe dans la plage prédéfinie, du résultat d'évaluation comprend :
la sortie, dans un état par défaut initial, du premier résultat d'évaluation en premier.

8. Procédé de traitement adaptatif de canal selon la revendication 1, dans lequel, après l'ajustement (S14), selon le résultat d'évaluation, du canal physique de commande de liaison descendante correspondant à l'équipement utilisateur et du canal physique partagé de liaison montante correspondant à l'équipement utilisateur, le procédé comprend en outre :
le comptage d'un nombre compté de chaque type de résultat d'évaluation correspondant au fait que la première valeur de mesure se situe dans la plage prédéfinie ; et
pour l'équipement utilisateur dont une liaison radio reste normale, l'augmentation du premier seuil, ou l'augmentation du premier seuil et du second seuil après qu'une somme des nombres comptés des deux types de résultats d'évaluation a été évaluée comme dépassant un seuil de somme et qu'un rapport du nombre compté du premier résultat d'évaluation au nombre compté du second résultat d'évaluation a été évalué comme étant supérieur à un seuil de rapport ;
dans lequel le seuil de rapport est supérieur à 1.

9. Procédé de traitement adaptatif de canal selon la revendication 1, dans lequel, après l'ajustement (S14), selon le résultat d'évaluation, du canal physique de commande de liaison descendante correspondant à l'équipement utilisateur et du canal physique partagé de liaison montante correspondant à l'équipement utilisateur, le procédé comprend en outre :
le comptage d'un nombre compté de chaque type de résultat d'évaluation correspondant au fait que la première valeur de mesure se situe dans la plage prédéfinie ; et
pour l'équipement utilisateur dont une liaison radio reste normale, la diminution du second seuil, ou la diminution du premier seuil et du second seuil après qu'une somme des nombres comptés des deux types de résultats d'évaluation a été évaluée comme dépassant un seuil de somme et que le rapport du nombre compté du second résultat d'évaluation au nombre compté du premier résultat d'évaluation a été évalué comme étant supérieur à un seuil de rapport ;
dans lequel le seuil de rapport est supérieur à 1.

10. Procédé de traitement adaptatif de canal selon la revendication 1, dans lequel, après l'ajustement (S14), selon le résultat d'évaluation, du canal physique de commande de liaison descendante correspondant à l'équipement utilisateur et du canal physique partagé de liaison montante correspondant à l'équipement utilisateur, le procédé comprend en outre :
le comptage d'un nombre compté de chaque type de résultat d'évaluation correspondant au fait que la première valeur de mesure se situe dans la plage prédéfinie ; et
pour l'équipement utilisateur avec une liaison radio anormale, la diminution du second seuil, ou la diminution du premier seuil et du second seuil après qu'une somme des nombres comptés des deux types de résultats d'évaluation a été évaluée comme dépassant un seuil de somme et qu'un rapport du nombre compté du premier résultat d'évaluation au nombre compté du second résultat d'évaluation a été évalué comme étant supérieur à un seuil de rapport ;
dans lequel le seuil de rapport est supérieur à 1.

11. Procédé de traitement adaptatif de canal selon la revendication 1, dans lequel, après l'ajustement (S14), selon le résultat d'évaluation, du canal physique de commande de liaison descendante correspondant à l'équipement utilisateur et du canal physique partagé de liaison montante correspondant à l'équipement utilisateur, le procédé comprend en outre :
le comptage d'un nombre compté de chaque type de résultat d'évaluation correspondant au fait que la première valeur de mesure se situe dans la plage prédéfinie ; et
pour l'équipement utilisateur avec une liaison radio anormale, l'augmentation du premier seuil, ou la diminution du premier seuil et du second seuil après qu'une somme des nombres comptés des deux résultats d'évaluation a été évaluée comme dépassant un seuil de somme et qu'un rapport du nombre compté du second résultat d'évaluation au nombre compté du premier résultat d'évaluation a été évalué comme étant supérieur à un seuil de rapport ;
dans lequel le seuil de rapport est supérieur à 1.

12. Station de base, comprenant :
au moins un processeur (201) ; et
une mémoire (202) connectée de manière communicative à l'au moins un processeur (201) ;
dans laquelle,
la mémoire (202) stocke des instructions exécutables par le au moins un processeur (201), les instructions étant exécutées par le au moins un processeur (201) pour réaliser le procédé de traitement adaptatif de canal selon l'une quelconque des revendications 1 à 11.

13. Support de stockage lisible par ordinateur stockant un programme informatique, dans lequel le programme informatique met en œuvre le procédé de traitement adaptatif de canal selon l'une quelconque des revendications 1 à 11 lorsqu'il est exécuté par un processeur.
